# EUROPEAN PATENT SPECIFICATION

(11) **EP 1 369 169 B1**
(45) Date of publication and mention of the grant of the patent: **06.09.2006**
(21) Application number: 02257338.0
(22) Date of filing: 22.10.2002
(51) Int. Cl.: B01F 7/04, B01F 15/00, C08G 64/20, C08G 85/00, C08G 63/78

(54) **Apparatus for continuous stirring and use for continuous polycondensation of polymer resin**
Vorrichtung zum kontinuierlichen Rühren und Verwendung zur kontinuierlichen Polymerharzpolykondensation
Appareil d'agitation continue et utilisation pour la polycondensation continue de resine polymere

(30) Priority: 07.06.2002 JP 2002167388; 30.08.2002 EP 02256058
(43) Date of publication of application: 10.12.2003
(73) Proprietor: Hitachi Ltd., Tokyo (JP)
(72) Inventor: Okamoto, Naruyasu, c/o Hitachi, Ltd., I. P. Group, Tokyo 100-8220 (JP); Motohiro, Seiji, Hitachi Ltd., Int. Prop. Group, Tokyo 100-8220 (JP); Harada, Susumu, Hitachi Ltd., Int. Prop. Group, Tokyo 100-8220 (JP); Itou, Yukika, Hitachi Kasado Engineering Co. Ltd., Kudamatsu-shi, Yamaguchi (JP)
(74) Representative: Calderbank, Thomas Roger

(56) References cited:
- EP-A- 1 002 820
- US-A- 3 964 874
- PATENT ABSTRACTS OF JAPAN vol. 005, no. 028 (C-044), 20 February 1981 (1981-02-20) & JP 55 152534 A (TOYOBO CO LTD), 27 November 1980 (1980-11-27)
- PATENT ABSTRACTS OF JAPAN vol. 1998, no. 05, 30 April 1998 (1998-04-30) & JP 10 000342 A (KOBE STEEL LTD), 6 January 1998 (1998-01-06)

## Description

The present invention relates to an apparatus and a process for stirring highly viscous materials, and more particularly to an apparatus for continuous stirring, suitable for continuous polycondensation or stirring, mixing or degassing of e.g. polycondensation series polymers (polymer resin) such as polyethylene terephthalate, polycarbonate, etc., and a process for continuous polycondensation of polymer resin.

Horizontal elongated cylidrical apparatuses for continuous stirring or continuous treatment (polycondensation, etc.) of polyethylene terephthalate, etc. have been so far disclosed in US Patent No. 4,776,703 (JP-A-62-112624), JP-A-3-239727 or US Patent No. 3,964,874 (JP-A-48-102894).

US Patent No. 4,776,703 discloses an apparatus for continuous treatment of a highly viscous material, which comprises a horizontal elongated cylindrical vessel and two rotating blade assemblies each comprising support rotors provided each at both end walls of the vessel, and a plurality of rectangular frame-shaped rod members connected to one another and spanned between the support rotors, where the adjacent rectangular frame-shaped rod members are connected to one another at a predetermined phase angle in the longitudinal direction of the vessel, thereby making the two rotating blade assemblies rotate in an intermeshed manner without any actual rotating center shaft spanned between the support rotor of the individual rotating blade assemblies.

US Patent No. 3,964,874 discloses an apparatus for continuous stirring of a viscous material, which comprises a cylindrical vessel, two rotating shafts provided in parallel to each other in the vessel, a plurality of elliptical plate members fixed to the rotating shaft as stirring blades and scraping plates fixed to the outermost ends of the individual elliptical plate members, where the scraping plates are in scraping contact with the entire inside wall of the vessel, thereby minimizing the dead space on the inside wall surface.

In the apparatus of US Patent No. 4,776,703, the two rotating blade assemblies are each made up of the rectangular frame-shaped rod members, whose adjacent ones are connected to each other at a predetermined phase angle and spanned between the rotor shafts, and thus are suitable for stirring and mixing a liquid feed having a high viscosity, for example, about 1,000 Pa·s or more with less resistance, but in the case of a liquid feed having a lower viscosity than about 1,000 Pa·s, the rectangular frame-shaped rod members only freely pass through the liquid feed without any effective scraping the liquid feed upwards, resulting in failure to promote evaporation of volatile matters and consequent prolongation of residence time.

The apparatus of US Patent No. 3,964,874 is suitable for stirring and mixing a liquid feed having a low viscosity, but in the case of a liquid feed having a higher viscosity than about a few hundred Pa·s, the stagnant high viscosity liquid feed deposited on the rotating shaft surfaces are liable to rotate together with the rotating shafts, so that the stagnant high viscosity liquid feed are highly susceptible to heat deterioration, etc., resulting in degrading of the quality of the resulting liquid product.

EP-A-1002820 discloses a process and apparatus for stirring polycarbonate in which the vessel is which the polycarbonate is stirred has a series of blade partition plates, each of which has an open center. The partition plate carry agitation blades and are connected together so that the partition plates, and hence the blades, can be rotated to stir the polycarbonate.

The present invention seeks to provide an apparatus for continuously stirring a viscous material, applicable to liquid feeds ranging from a low viscosity to a high viscosity to obtain the resulting liquid product of good quality and also a process for continuous polycondensation of polymer resin, in accordance with claim 1.

According to a first aspect of the invention there is provided apparatus for continuous stirring, comprising a vessel and two blade assemblies provided parallel to each other along a horizontal direction in the vessel and arranged to rotate in directions opposite to each other; wherein a liquid feed supplied from an inlet at one end of the vessel is stirred, mixed and moved through the vessel by rotation of the two blade assemblies in the directions opposite to each other; wherein the two blade assemblies each comprise: a first rotor shaft rotatably supported by a bearing at one end of the vessel; a second rotor shaft rotatably supported by another bearing at the other end of the vessel; a first support member fixed to the first rotor shaft near the one end of and within the vessel; a second support member fixed to the second rotor shaft near the other end of and within the vessel; connecting members spanned between the first support member and the second support member around an imaginary rotation axis of the blade assembly; and a plurality of plate-shaped stirring blades fixed to the connecting members, the plate-shaped stirring blades being parallel to one another and each having a scraping member at their outer periphery which extends along the longitudinal direction of the imaginary rotation axis; wherein the connecting members are radially spaced from the imaginary rotation axis in order to form a clearance in the region around the imaginary rotation axis to allow the liquid feed to move through the clearance in a vertical direction and an axial direction, and the plate-shaped stirring blades are pairs of plate-shaped members, each pair being arranged symmetrically about the imaginary rotation axis and being fixed to the connecting members multistage-wise by successively changing the direction of the plate-shaped stirring blades at a phase angle of 90° in the longitudinal direction of the imaginary rotation axis, whereby the scraping members at the outer periphery of the plate-shaped stirring blades in the two blade assemblies form a mutual intermeshing arrangement between the connecting members of each blade assembly.

A second aspect of the present invention proposes the use of the apparatus of the first aspect to achieve continuous polycondensation of polymer resin, wherein
a polymer resin having a low degree of polymerisation is continuously supplied as the liquid fee into the vessel from the inlet, the viscosity of the liquid feed being a few Pa.S or more, stirring the liquid feed by rotation of the two rotating blade assemblies in the direction opposite to each other, thereby carrying out good surface renewal and evaporation of volatile matters, and moving the liquid feed towards an outlet thereby enhancing the degree of polymerisation to a few kPa.S, in accordance with claim 6.

In the present invention, a polymer resin having a low degree of polymerization is continuously supplied as a liquid feed into the vessel of the apparatus for continuous stirring from the inlet and stirred by rotating the two rotating blade assemblies in the direction opposite to each other, while moving the liquid feed towards the outlet, thereby conducting good surface renewed to evaporate the volatile matters and enhance the degree of polymerization.

Other objects, features and advantages of the invention will become apparent from the following description of the embodiments of the invention taken in conjunction with the accompanying drawings.

In the drawings:
Fig. 1 is a partial cut-away plan view of an apparatus for continuous stirring according to one embodiment of the present invention;
Fig. 2 is a partially cut-away elevation view along the line II-II of Fig. 1.
Fig. 3 is a vertical cross-sectional view along the line III-III of Fig. 2.
Fig. 4 is an enlarged view of plate-shaped stirring blades according to the present invention.

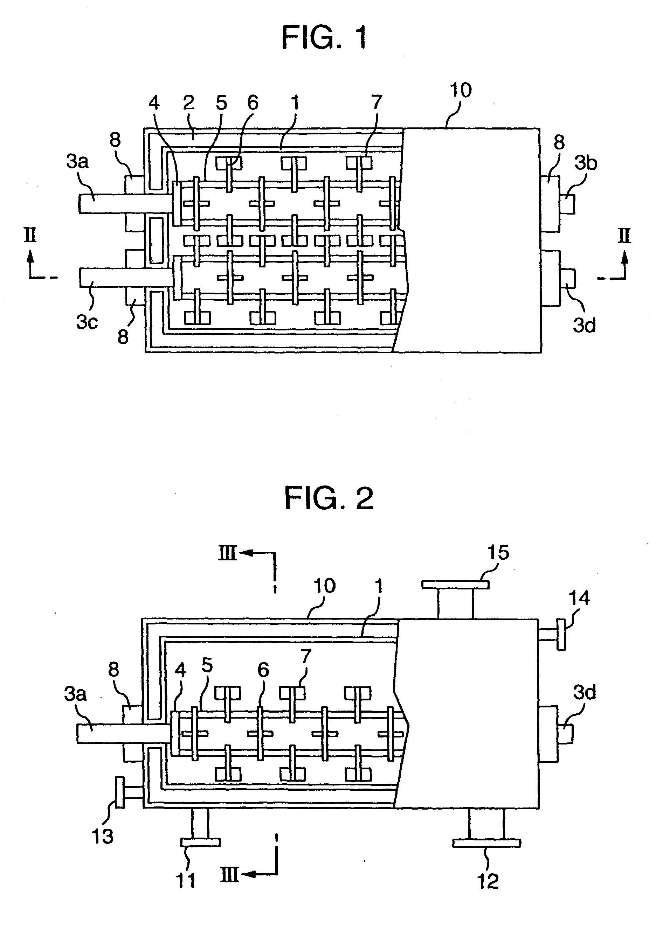

In the foregoing Figs. 1 to 4, reference numerals have the following meanings: 1: horizontal elongated cylindrical vessel, 2: heating medium jacket, 3a and 3c: first rotor shafts, 3b and 3d: second rotor shafts, 4: first and second support members, 5: rod-shaped, connecting member, 6: plate-shaped stirring blade, 6a and 6b: plate-shaped member, 7: scraping member, 8: bearing, 10: stirring apparatus proper, 11: inlet nozzle, 13: outlet nozzle, 13: heating medium inlet nozzle, 14: heating medium outlet nozzle, 15: outlet nozzle for volatile matters, 20: hole (opening), 21: clearance (space).

Embodiments of the present invention will be described below, referring to Figs. 1 to 4.

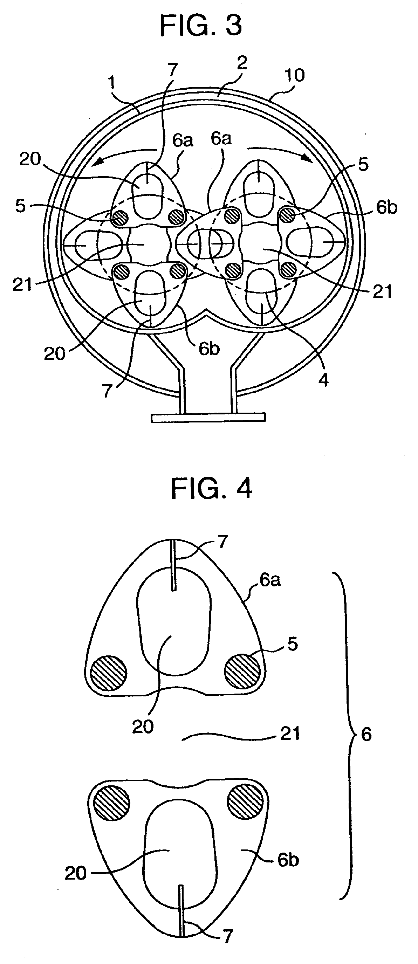

As shown in Figs. 1 and 2, stirring apparatus proper 10 comprises a horizontal elongated cylindrical vessel 1 having a cross-section as shown in Fig. 3, provided in a horizontal direction of the apparatus 10, whose outer periphery is covered by heating medium jacket (heater) 2, to which a heating medium is supplied to heat the vessel 1. Through each of both ends in the longitudinal direction of the horizontal elongated cylindrical vessel 1 are penetrated two pairs of first rotor shafts 3a - second rotor shaft 3b, and first rotor shaft 3c - second rotor shaft 3d, each being supported in a rotatable manner by bearing 8, while the first rotor shaft 3a and the first rotor shaft 3c are each connected to a rotation driver provided outside the vessel 1 so that they can be driven to undergo synchronized rotation in the direction opposite to each other. First and second disk-shaped support members 4 are fixed to the first rotor shafts 3a and 3c, and to the second rotor shafts 3b and 3d, respectively, in positions near the both ends in the longitudinal direction of and within the vessel. The first disk-shaped support members 4 and the second disk-shaped support members are connected to each other by rod-shaped connecting members 5, as reinforcing members, i.e. 4 connecting members in this case, where the rod-shaped connecting members 5 may have partially different radii, depending on their spanning positions, but should be rod-shaped on the whole. The rod-shaped connecting members 5 are provided in the radial direction and in intermediate positions far from the substantial rotating shaft center. That is, the rod-shaped connecting members 5 are provided in positions far from the substantial rotating shaft center by about one half of the distance between the substantial rotating shaft center and the tip end of scraping blades 7 positioned at the outermost periphery and also in positions that should not interfere with plate-shaped members 6a and 6b making up plate-shaped stirring blades and also with scraping members 7 of the adjacent rotating blade assembly provided in parallel in the horizontal direction of the vessel 1.

Pairs of plate-shaped members 6a and 6b are supported by two counterposed rod-shaped connecting members 5 of the four rod-shaped connecting members 5 at a phase angle of 180°, respectively, and adjacent pairs of plate-shaped members 6a and 6b in the substantial rotating shaft center are likewise supported by the two counterposed connecting members 5 at a staggered phase angle of 90° with respect to the former two pairs of plate-shaped members 6a and 6b. Scraping members 7 are fixed each to the tip ends of the plate-shaped members 6a and 6b.

Preferable intermediate position which the rod-shaped connecting members 5 are spanned between the first and second disk-shaped support members must be so located that the radius from the substantial rotating shaft center to the centers each of rod-shaped connecting members 5 can be selected from a range of about 0.3R - about 0.7R, where R is a radius from the substantial rotating shaft center to the outermost periphery of the scraping members 7. When the number of rod-shaped connecting members 5 is more than 4, the diameter of the rod-shaped connecting members 5 as reinforcing members can be made smaller without any fear of deteriorating the required strength, though depending on the size of pairs of the plate-shaped members 6a and 6b making up the plate-shaped stirring blades. In the foregoing embodiment, each of the plate-shaped members is supported by two rod-shaped connecting members 5, and thus total four rod-shaped connecting members 5 support each pair of the plate-shaped members, but the number of the rod-shaped connecting members 5 depends on the size of pairs of the phase-shaped members 6a and 6b making up the plate-shaped stirring blades, as mentioned above. A pair of the two rod-shaped connecting members 5 that support plate-shaped members 6a or 6b are provided symmetrically about the substantial rotating shaft center. A plurality of pairs of approximately triangular plate-shaped members 6a and 6b are provided and fixed to the rod-shaped connecting members 5 in the direction of substantial rotating shaft center. As is obvious from Figs. 3 and 4, the approximately triangular plate-shaped members 6a and 6b each with a narrow sharp tip end are effective for mutual intermeshing arrangement between the rod-shaped connecting members 5 provided in the intermediate positions. When the rod-shaped connecting members 5 are provided nearer to the outermost periphery of the scraping members 7, for example, at about 0.7R, the outer profiles of plate-shaped members 6a and 6b can be approximated to an elliptical shape with an expanded center in the radial direction.

Pitch in the direction of substantial rotating shaft center of pairs of the plate-shaped members 6a and 6b as arranged in parallel may be made larger from the inlet side towards the outlet side of vessel 1, as disclosed in JP-A-3-239727. At the outermost periphery each of the pairs of plate-shaped members 6a and 6b are provided scraping members 7 (scraping plates or scraping bars) each at a right angle to the plate-shaped members 6a and 6b, thereby forming plate-shaped stirring blades (as provided symmetrically about the substantial rotating shaft center), each made up of a pair of the plate-shaped members with clearance 21 therebetween in the region of substantial rotating shaft center, thereby allowing the liquid feed to move through the clearance in the vertical direction and the axial direction, as shown in Fig. 4. Needless to say, scraping plates as scraping members 7 have a stronger scraping power. As shown in Figs. 3 and 4, the plate-shaped members 6a and 6b making up plate-shaped stirring blades 6 each an elliptical hole 20 having an area large enough to make a portion of the liquid feed into a thin film state when the portion of the liquid feed scraped upwards by the scraping members 7 falls downward.

As shown in Fig. 3, the plate-shaped stirring blades 6 made up of such pairs of plate-shaped members 6a and 6b are fixed to the rod-shaped connecting members 5 multistage-wise while successively changing directions at a phase angle of 90° as viewed from the axial direction. When the rotor shafts 3a and 3c are synchronized to rotate in the direction opposite to each other, the plate-shaped stirring blades 6 themselves arranged in parallel in the horizontal direction of the vessel so as to correspond to the rotor shafts 3a and 3c are provided at a phase angle of 90° to one another, as shown in Fig. 3. The rotor shafts 3a-3b and 3c-3d are made to rotate in the direction opposite to each other so that the two sets of a pair of plate-shaped stirring blade can bring the liquid feed upward from the inner side in the horizontal elongated cylindrical vessel 1 of the stirring apparatus proper 10.

As described above, the rod-shaped connecting members 5 are provided in intermediate positions in the radial direction, the rod-shaped connecting members 5 each have a slower intermediate peripheral speed than the outermost peripheral speed of scraping members 7, and as shown in Figs. 3 and 4, the members existing in the interior region enclosed by the rod-shaped connecting members 5 can be eliminated therefrom, thereby completely eliminating the parts making the liquid feed to undergo stagnant rotation i.e. parts substantially in a stagnant state. All the rod-shaped connecting members 5 can rotate at an intermediate peripheral speed, thereby reducing the resistance to the liquid feed and enabling the resolution rate of the rotating blade assemblies provided with plate-shaped stirring blades 6 having the scraping members to be changed in a broad range of 0.5 to 20 rpm.

Inlet nozzle 11 for the liquid feed is provided at the bottom or side wall at one end of the horizontal elongated cylindrical vessel 1 of stirring apparatus proper 10, whereas outlet nozzle 12 for the liquid product is provided at the bottom at the other end thereof. Outlet nozzle 15 for volatile matters is provided at the top thereof. Numerals 13 and 14 are an inlet nozzle and an outlet nozzle for the heating medium to and from the heating medium jacket 2, respectively.

By synchronized rotation in the direction opposite to each other of two rotating blade assemblies comprising first rotor shaft 3a-second rotor shaft b and first rotor shaft 3c-second rotor shaft 3d, first and second support members 4 fixed each to the corresponding ends of the first and second rotor shafts, a plurality of rod-shaped connecting members 5 spanned in the radial direction and in intermediate positions, which is far from the substantial rotating shaft center, but inner from the outermost periphery of the scraping members 7 between the first and second support members 4 as reinforcing members, and a plurality of plate-shaped stirring blades 6 arranged in parallel to one another along and fixed to the rod-shaped connecting members 5 as structured in the aforementioned manner, a liquid feed is supplied into the vessel 1 of stirring apparatus proper 10 from the inlet nozzle 11 and moves therethrough in the direction toward the outlet nozzle 12 while undergoing stirring and mixing actions, and after the desired polycondensation reaction the resulting liquid product is continuously discharged from the outlet nozzle 12 to the outside of the stirring apparatus proper 10, where the liquid feed is scraped upwards by scraping members 7 fixed to the tip ends of stirring blades 6 and is made to fall downwards in a thin film state along the surfaces of the plate-shaped members 6a and 6b to evaporate the volatile matters off from the liquid feed. Needless to say, the rod-shaped connecting members 5 rotate in the above-mentioned given radius, and thus the liquid feed is also made to fall in a thin film state from the surfaces of the rod-shaped connecting members 5 to evaporate the volatile matters off from the liquid feed. Scraping members 7 scrape the inner wall surface of the vessel 1 of stirring apparatus proper 10.

As already described above, the two rotating blade assemblies each have no actual rotating shaft counter, but only a substantial rotating shaft center, i.e. an imaginary rotating shaft center. In the space of the actual rotating shaft center there are neither rod-shaped connecting members 5 nor parts of plate-shaped members 6a and 6b making up the stirring blades. As a result, deposition and rotation of the stagnant liquid feed can be suppressed, while necessary conditions for stirring, mixing, degassing and movement of the liquid feed can be maintained.

According to one preferable embodiment of the present invention, the approximately triangular plate-shaped members 6a and 6b each have an elliptical hole 20, as shown in Fig. 4. With such approximately triangular plate-shaped members 6a and 6b, a portion of the liquid feed scraped onto the scraping members 7 is made to fall downwards or trickle down in a thin film state in the region of hole 20 (opening) of the approximately triangular plate-shaped members 6a and 6b, thereby more effectively promoting evaporation of volatile matters. That is, the liquid feed is deposited so thick on the surfaces of the plate-shaped members 6a and 6b that evaporation of volatile matters cannot be promoted, but the liquid feed is formed into a thin film stage in the region of said hole 20 (opening) and trickled down, so that the evaporation of volatile matters can be much more promoted.

When continuous polycondensation of polyethylene terephthalate, etc. is carried out in the present stirring apparatus, an intermediate polymer having an inlet viscosity of a few Pas to a few tens of Pas is supplied as a liquid feed into vessel 1 of stirring apparatus proper 10 from inlet nozzle 11, and the vessel 1 of the stirring apparatus proper 10 is heated to 260° - 300°C by a heating medium introduced into heating medium jacket (heater) 2, and kept to a pressure of 0.01 - 10 kPa by an evacuating means connected through outlet nozzle 15 for volatile matters. Two rotating blade assemblies with stirring blades 6 provided horizontally in parallel to each other in the vessel 1 are made to rotate in the direction opposite to each other in a range of 0.5 - 20 rpm, thereby subjecting the fed intermediate polymer to stirring and surface renewal and consequent evaporative removed of volatile matters such as ethylene glycol, etc. from the intermediate polymer. The height of the liquid level of the liquid feed is about 1/5 to about 1 of the height H from the bottom of the vessel 1 to the substantial rotating shaft center. The liquid feed, while flowing from the inlet nozzle to the outlet nozzle, undergoes repeated stirring and surface renewal by the stirring blades 6 to carry out polycondensation of the liquid feed, and finally polymers having a higher viscosity, e.g. a few hundred to a few thousand Pa·s, can be obtained. The resulting liquid product having a higher degree of polymerization and a higher viscosity is discharged from outlet nozzle 12 to the outside of the stirring apparatus proper 10, and led to post-treatment steps such as chip cutter, etc. Volatile matters such as ethylene glycol, etc. separated during the polycondensation are discharged through outlet nozzles 15 of the outside of the stirring apparatus proper 10.

Likewise, the present invention can be also applied to production of polymer resins such as polyactual, polyamide, polycarbonate, etc. besides the polyester-based materials such as polyethylene terephthalate, etc.

Heretofore, treatment of a liquid feed ranging from an inlet viscosity of a few tens Pa·s to a high outlet viscosity of about 1,000 Pa·s or treatment of a liquid feed ranging from an inlet viscosity of about 1,000 Pa·s to a high outlet viscosity of about 10,000 Pa·s has been carried out in a divided manner, but the present invention provides a continuous treatment of a liquid feed from a low inlet viscosity of a few Pa·s to a polymer product having a high viscosity of a few ten thousand Pa·s without any quality deterioration. In the present invention, treatment of a liquid feed ranging from an inlet viscosity of about 100 Pa·s to an outlet viscosity of about 20,000 Pa·s can be preferably carried out.

According to the present invention, stagnation of a liquid feed due to deposition on the surfaces of rotating shafts and rotation of stagnant polymer products having a viscosity on the actual rotating shafts in the conventional stirring apparatus can be eliminated and quality deterioration due to scaling, etc. can be also prevented by reducing the dead space in the stirring apparatus. Thus, highly viscous materials can be effectively and continuously treated in a high quality in the present invention.

According to the present invention, a liquid feed in a broad range of a low viscosity to a high viscosity can be effectively stirred and mixed in one stirring apparatus.

In the foregoing embodiments of the present invention, 4 rod-shaped connecting members are used for one rotating blade assembly, but three rod-shaped connecting members can be used for one rotating blade assembly, where plate-shaped members are successively fixed to two of the three rod-shaped connecting members at a phase angle of 120°. That is, at least three rod-shaped connecting members can make up the necessary structure of one rotating blade assembly, and number of the rod-shaped connecting members can be selected properly as required.

It will be further understood by those skilled in the art that although the foregoing description has been made on embodiments of the invention, the invention is not limited thereto and various changes and modifications may be made without departing from the scope of the appended claims, as interpreted by the description and drawings.

## Claims

1. Apparatus for continuous stirring, comprising:
a vessel (1); and
two blade assemblies provided parallel to each other along a horizontal direction in the vessel (1) and arranged to rotate in directions opposite to each other;
wherein a liquid feed supplied from an inlet (11) at one end of the vessel (1) is stirred, mixed and moved through the vessel (1) by rotation of the two blade assemblies in the directions opposite to each other;
**characterised in that**:
the two blade assemblies each comprise:
a first rotor shaft (3a, 3c) rotatably supported by a bearing (8) at one end of the vessel (1);
a second rotor shaft (3b, 3d) rotatably supported by another bearing (8) at the other end of the vessel (1);
a first support member (4) fixed to the first rotor shaft (3a, 3c) near the one end of and within the vessel (1) ;
a second support member (4) fixed to the second rotor shaft (3b, 3d) near the other end of and within the vessel (1);
connecting members (5) spanned between the first support member (4) and the second support member (4) around an imaginary rotation axis of the blade assembly; and
a plurality of plate-shaped stirring blades (6) fixed to the connecting members (5), the plate-shaped stirring blades being parallel to one another and each having a scraping member (7) at their outer periphery which extends along the longitudinal direction of the imaginary rotation axis;
wherein the connecting members (5) are radially spaced from the imaginary rotation axis in order to form a clearance in the region around the imaginary rotation axis to allow the liquid feed to move through the clearance in a vertical direction and an axial direction, and
the plate-shaped stirring blades (6) are pairs of plate-shaped members, each pair being arranged symmetrically about the imaginary rotation axis and being fixed to the connecting members (5) multistage-wise by successively changing the direction of the plate-shaped stirring blades (6) at a phase angle of 90° in the longitudinal direction of the imaginary rotation axis,
whereby the scraping members (7) at the outer periphery of the plate-shaped stirring blades (6) in the two blade assemblies form a mutual intermeshing arrangement between the connecting members (5) of each blade assembly.

2. Apparatus according to claim 1, wherein the vessel (1) is a horizontal elongated cylinder in which the inlet (11) for supplying the liquid feed is at one longitudinal end thereof, the cylinder also having an outlet (13) for discharging the stirred and mixed liquid feed at the other longitudinal end thereof and an outlet (15) for volatile matters at the top thereof.

3. Apparatus according to claim 1, wherein the plate-shaped stirring blades (6) each have a hole for making the liquid feed into a thin film stage when the liquid feed is trickled down.

4. Apparatus according to claim 1, wherein the plate-shaped stirring blades (6) are made up of an approximately triangular plate-shaped member.

5. Apparatus according to any of claims 1 to 4, wherein the radial spacing of the connecting members (5) from the imaginary rotation axis is between 0.3R and 0.7R, wherein R is the radial distance from the imaginary rotation axis to the outermost periphery of a scraping member (7).

6. Use of the apparatus of claim 1 to achieve continuous polycondensation of polymer resin, wherein
a polymer resin having a low degree of polymerisation is continuously supplied as the liquid feed into the vessel (1) from the inlet (11), the viscosity of the liquid feed being a few Pa·S or more, stirring the liquid feed by rotation of the two rotating blade assemblies in the direction opposite to each other, thereby carrying out good surface renewal and evaporation of volatile matters, and moving the liquid feed towards an outlet (15), thereby enhancing the degree of polymerisation to a few kPa·S.

7. The use of claim 6, wherein the plate-shaped stirring blades (6) are rotated at a rotating rate ranging from 0.5 rpm to 20 rpm.

## Patentansprüche

1. Vorrichtung zum kontinuierlichen Rühren, die umfaßt:
- ein Gefäß (1) und
- zwei Blattgruppen, die parallel zueinander in einer horizontalen Richtung im Gefäß (1) vorgesehen und so ausgebildet sind, dass sie sich bezogen aufeinander, in entgegengesetzten Richtungen drehen, wobei eine flüssige Charge, welche über einen Einlaß (11) an einem Ende des Gefäßes (1) zugeführt wird, durch die Drehung der zwei Blattgruppen in zueinander entgegengesetzten Richtungen gerührt, gemischt und durch das Gefäß (1) bewegt wird,
**dadurch gekennzeichnet, daß**
die zwei Blattgruppen jeweils umfassen:
- eine erste Rotorwelle (3a, 3c), die durch ein Lager (8) an einem Ende des Gefäßes (1) drehbar abgestützt ist,
- eine zweite Rotorwelle (3b, 3d), die durch ein weiteres Lager (8) am anderen Ende des Gefäßes (1) drehbar abgestützt ist,
- ein erstes Stützelement (4), das an der ersten Rotorwelle (3a, 3c) nahe an einem Ende des Gefäßes (1) und in demselben befestigt ist,
- ein zweites Stützelement (4), das an der zweiten Rotorwelle (3b, 3d) nahe am anderen Ende des Gefäßes (1) und in demselben befestigt ist,
- Verbindungselemente (5), die zwischen dem ersten (4) und dem zweiten Stützelement (4) um eine imaginäre Drehachse der Blattgruppe verspannt sind, und
- mehrere plattenförmige Rührblätter (6), die an den Verbindungselementen (5) befestigt sind, wobei die plattenförmigen Rührblätter (6) zueinander parallel sind und jeweils ein Schabelement (7) am Außenumfang aufweisen, welches sich in Längsrichtung längs der imaginären Drehachse erstreckt, wobei
- die Verbindungselemente (5) zur Ausbildung einer Lücke im Bereich um die imaginäre Drehachse herum radial von der imaginären Drehachse beabstandet sind, damit die flüssige Charge sich durch die Lücke in senkrechter Richtung und in axialer Richtung hindurchbewegen kann, und
- die plattenförmigen Rührblätter (6) Paare plattenförmiger Elemente sind, und jedes Paar symmetrisch um die imaginäre Drehachse herum angeordnet und an den Verbindungselementen (5) mehrstufig befestigt ist, während sich die Richtung der plattenförmigen Rührblätter (6) sukzessive um einen Phasenwinkel von 90° in Längsrichtung der imaginären Drehachse ändert,
- wodurch die Schabelemente (7) am Außenumfang der plattenförmigen Rührblätter (6) in den zwei Blattgruppen eine ineinandergreifende Anordnung zwischen den Verbindungselementen (5) jeder Blattgruppe bilden.

2. Vorrichtung nach Anspruch 1, bei dem das Gefäß (1) einen horizontalen länglichen Zylinder darstellt, in dem sich der Einlaß (11) zur Zuführung der flüssigen Charge an einem Längsende desselben befindet, und der Zylinder auch einen Auslaß (13) zur Ausgabe der gerührten und gemischten flüssigen Charge am anderen Längsende desselben und einen Auslaß (15) oben am Gefäß für flüchtige Substanzen aufweist.

3. Vorrichtung nach Anspruch 1, bei dem die plattenförmigen Rührblätter (6) jeweils ein Loch aufweisen, um beim Heruntertropfen der flüssigen Charge eine Dünnfilmphase zu bewirken.

4. Vorrichtung nach Anspruch 1, bei dem die plattenförmigen Rührblätter (6) aus einem angenähert dreieckigen plattenförmigen Element bestehen.

5. Vorrichtung nach einem der Ansprüche 1 bis 4, bei dem die radiale Beabstandung der Verbindungselemente (5) von der imaginären Drehachse zwischen 0,3 und 0,7 R beträgt, wobei R den radialen Abstand von der imaginären Drehachse zum äußersten Umfang eines Schabelements (7) bedeutet.

6. Verwendung der Vorrichtung von Anspruch 1 zur Erzielung einer kontinuierlichen Polykondensation von Polymerharz, wobei ein Polymerharz mit einem niedrigen Polymerisationsgrad kontinuierlich durch den Einlaß (11) als flüssige Charge in das Gefäß (1) zugeführt wird, und die Viskosität der flüssigen Charge wenige Pa.S oder darüber beträgt, die flüssige Charge durch die Drehung der zwei sich in entgegengesetzten Richtungen drehenden Blattgruppen gerührt wird, wodurch eine gute Oberflächenerneuerung und eine Verdampfung der flüchtigen Substanzen bewirkt wird, und die flüssige Charge zu einem Auslaß (15) bewegt wird, wodurch der Polymerisationsgrad auf einige kPa·S erhöht wird.

7. Anwendung von Anspruch 6, wobei die plattenförmigen Rührblätter (6) mit einer Drehzahl im Bereich von 0,5 bis 20 Umdrehungen pro Minute gedreht werden.

## Revendications

1. Dispositif d'agitation continue, comportant :
un récipient (1), et
deux ensembles de pales agencés parallèlement l'un à l'autre le long d'une direction horizontale dans le récipient (1), et agencés pour tourner dans des directions opposées l'une à l'autre,
dans lequel une matière première liquide alimentée depuis une entrée (11) à une première extrémité du récipient (1) est agitée, mélangée et déplacée à travers le récipient (1) par rotation des deux ensembles de pales dans les directions opposées l'une à l'autre,
**caractérisé en ce que** :
les deux ensembles de pales comportent chacun :
un premier arbre de rotor (3a, 3c) supporté de manière rotative par un palier (8) à une première extrémité du récipient (1),
un second arbre de rotor (3b, 3c) supporté de manière rotative par un autre palier (8) à l'autre extrémité du récipient (1),
un premier élément de support (4) fixé sur le premier arbre de rotor (3a, 3c) à proximité de la première extrémité du récipient (1), et dans celui-ci,
un second élément de support (4) fixé sur le second arbre de rotor (3b, 3d) à proximité de l'autre extrémité du récipient (1), et dans celui-ci,
des éléments de connexion (5) formant un pont entre le premier élément de support (4) et le second élément de support (4) autour d'un axe de rotation imaginaire de l'ensemble de pales, et
une pluralité de pales d'agitation en forme de plaque (6) fixées sur les éléments de connexion (5), les pales d'agitation en forme de plaque étant parallèles les unes aux autres, et chacune ayant un élément de raclage (7) à sa périphérie extérieure qui s'étend le long de la direction longitudinale de l'axe de rotation imaginaire,
dans lequel les éléments de connexion (5) sont espacés radialement à partir de l'axe de rotation imaginaire pour former un jeu dans la zone autour de l'axe de rotation imaginaire afin de permettre à la matière première liquide de se déplacer à travers le jeu dans une direction verticale et une direction axiale, et
les pales d'agitation en forme de plaque (6) sont des paires d'éléments en forme de plaque, chaque paire étant agencée de manière symétrique autour de l'axe de rotation imaginaire et étant fixée sur les éléments de connexion (5) en plusieurs étages en changeant successivement la direction des pales d'agitation en forme de plaque (6) à un angle de phase de 90° dans la direction longitudinale de l'axe de rotation imaginaire,
de sorte que les éléments de raclage (7) à la périphérie extérieure des pales d'agitation en forme de plaque (6) dans les deux ensembles de pales forment un agencement d'engrènement mutuel entre les éléments de connexion (5) de chaque ensemble de pales.

2. Dispositif selon la revendication 1, dans lequel le récipient (1) est un cylindre allongé horizontal dans lequel l'entrée (11) pour alimenter la matière première liquide est à une première extrémité longitudinale de celui-ci, le cylindre ayant également une sortie (13) pour évacuer la matière première liquide agitée et mélangée à son autre extrémité longitudinale, et une sortie (15) pour des matières volatiles à sa partie supérieure.

3. Dispositif selon la revendication 1, dans lequel les pales d'agitation en forme de plaque (6) ont chacune un trou pour faire en sorte que la matière première liquide soit à un stade de film mince lorsque la matière première liquide s'écoule vers le bas.

4. Dispositif selon la revendication 1, dans lequel les pales d'agitation en forme de plaque (6) sont constituées d'un élément en forme de plaque approximativement triangulaire.

5. Dispositif selon l'une quelconque des revendications 1 à 4, dans lequel l'espacement radial des éléments de connexion (5) à partir de l'axe de rotation imaginaire est entre 0,3 R et 0,7 R, dans lequel R est la distance radiale à partir de l'axe de rotation imaginaire jusqu'à la périphérie la plus extérieure d'un élément de raclage (7).

6. Utilisation du dispositif selon la revendication 1 pour réaliser une polycondensation continue d'une résine polymère, dans laquelle
une résine polymère ayant un faible degré de polymérisation est alimentée en continu en tant que matière première liquide dans le récipient (1) à partir de l'entrée (11), la viscosité de la matière première liquide étant de quelques kPa·S ou plus, comportant l'agitation de la matière première liquide par rotation des deux ensembles de pales rotatifs dans la direction opposée l'un à l'autre, en effectuant ainsi un bon renouvellement de surface et une bonne évaporation des matières volatiles, et en déplaçant la matière première liquide vers une sortie (15), en améliorant ainsi le degré de polymérisation jusqu'à quelques kPa·S.

7. Utilisation selon la revendication 6, dans laquelle les pales d'agitation en forme de plaque (6) sont amenées à tourner à une vitesse de rotation dans la plage de 0,5 tpm à 20 tpm.
